# FASCICULE DE BREVET EUROPEEN

(11) **EP 2 985 908 B1**
(45) Date de publication et mention de la délivrance du brevet: **13.09.2017**
(21) Numéro de dépôt: 15306285.6
(22) Date de dépôt: 11.08.2015
(51) Int. Cl.: H02S 20/21

(54) **STRUCTURE D'AFFICHAGE LUMINEUX VARIABLE POUR VOIE(S) DE CIRCULATION AUTOMOBILE À ALIMENTATION ÉLECTRIQUE PAR PANNEAU(X) PHOTOVOLTAÏQUE(S)**
VARIABLE LEUCHTANZEIGESTRUKTUR FÜR FAHRBAHNEN FÜR AUTOS MIT STROMVERSORGUNG DURCH FOTOVOLTAIKPANEEL(E)
VARIABLE LIGHT DISPLAY STRUCTURE FOR HIGHWAY(S) WITH ELECTRIC POWER SUPPLY BY PHOTOVOLTAIC PANEL(S)

(30) Priorité: 12.08.2014 FR 1457769
(43) Date de publication de la demande: 17.02.2016
(73) Titulaire: AXIMUM, 78114 Magny les Hameaux (FR)
(72) Inventeur: Gauthier, Franck, 37390 Mettray (FR)
(74) Mandataire: Jacobacci Coralis Harle

(56) Documents cités:
- EP-A1- 1 502 999
- EP-A1- 2 393 079
- CN-A- 103 122 613
- CN-U- 202 530 392
- ES-U- 1 075 234
- US-A- 5 008 967

## Description

La présente invention concerne une structure d'affichage lumineux à messages variables pour voie(s) de circulation automobile qui est alimentée électriquement par au moins un panneau photovoltaïque. Elle a essentiellement des applications dans le domaine de la construction et de l'entretien des routes et autoroutes pour la diffusion de messages concernant la conduite et la circulation des automobilistes. Elle peut cependant trouver des applications dans le domaine de la publicité dans lequel des messages publicitaires peuvent être diffusés sur ou le long des voies de circulation ou des parkings ou d'autres sites où du public peut se trouver.

Les portiques ou potences d'affichage lumineux variable sont maintenant largement utilisés le long ou sur les voies de circulation automobile. Pour être visibles de loin par les automobilistes, ces structures comportent au moins un pilier support vertical et une traverse horizontale supportant un panneau d'affichage lumineux à messages variables disposé en hauteur. Dans le contexte de l'invention, le terme structure doit être compris comme correspondant à une structure porteuse d'affichage lumineux variable à un, deux ou plus piliers support. Pour un portique sur voies de circulation, deux piliers, de part et d'autre des voies, sont érigés afin de supporter le panneau d'affichage lumineux étendu transversalement au-dessus des voies. Une potence disposée latéralement aux voies ne comporte qu'un seul pilier support. Le panneau d'affichage lumineux est dans tous les cas à alimentation électrique.

Ces structures peuvent être disposées en tout lieu et notamment dans des zones rurales, voire désertiques, où le réseau électrique n'est pas toujours établi. On a donc proposé de mettre en oeuvre des sources d'alimentation électrique autonomes comme par exemple des éoliennes ou des panneaux photovoltaïques.

En pratique, on fixe mécaniquement les panneaux photovoltaïques sur la structure. Afin d'avoir un rendement optimum, on place les panneaux photovoltaïques qui sont fixes, orienté vers une zone du ciel où en moyenne la luminosité solaire est la plus grande. Il en résulte que sous des latitudes autres que l'équateur, les panneaux photovoltaïques doivent avoir une inclinaison relativement importante. En pratique, les panneaux photovoltaïques sont orientés vers le sud selon un axe pratiquement vertical.

Ceci entraine deux conséquences. D'une part, les panneaux photovoltaïques présentent alors une surface importante, possiblement en porte à faux, et sont soumis au vent qui génère de fortes contraintes mécaniques vers la structure et vers les massifs en béton d'ancrage au sol. Afin de supporter ces efforts supplémentaires, les éléments de structure et les massifs en béton doivent être surdimensionnés.

D'autre part, les panneaux photovoltaïques présentent également une surface visible par des personnes au sol qui est relativement importante. En conséquence, ces panneaux photovoltaïques sont en pratique très visibles du public et ils peuvent susciter la convoitise de personnes mal intentionnées : vol, tir à la carabine...

Le dispositif selon l'invention propose une solution qui permet de remédier à ces inconvénients. Dans son principe, l'invention consiste à placer les panneaux photovoltaïques sur le dessus et en arrière du panneau d'affichage lumineux à l'horizontale ou, de préférence, avec une légère inclinaison vers l'arrière et le bas selon une orientation qui est donc indépendante de la zone du ciel où luminosité solaire est la plus grande. La légère inclinaison permet d'éviter que des déchets ne puissent s'accumuler facilement sur les panneaux photovoltaïques. Les panneaux photovoltaïques sont alors masqués des personnes au sol par le panneau d'affichage lumineux. En outre, ils sont positionnés dans une zone où ils sont pratiquement dans le plan du/des piliers du portique ce qui limite le porte à faux. Leur prise au vent est en outre réduite du fait de leur faible inclinaison et de la présence du panneau d'affichage lumineux sur leur avant.

On connait par les documents CN103122613A, CN202530392U, ES1075234U des structures d'affichage lumineux à panneaux photovoltaïques. Par les documents EP1502999A1, US5008967A on connait des portiques, notamment pour affichage, à chemin de circulation ouvert sur l'environnement.

Ainsi, l'invention concerne une structure d'affichage lumineux selon la revendication 1.

Dans divers modes de mise en oeuvre de l'invention, les moyens suivants pouvant être utilisés seuls ou selon toutes les combinaisons techniquement possibles, sont employés :
- l'extrémité avant du panneau photovoltaïque est placée sensiblement contre l'extrémité supérieure du panneau d'affichage,
- les panneaux photovoltaïques sont en alignement côte à côte le long de l'arrière du panneau d'affichage,
- la face arrière du panneau d'affichage lumineux permet l'accès à des équipements internes du panneau d'affichage,
- le panneau d'affichage lumineux est à télécommande d'affichage,
- la télécommande est par ondes radioélectriques,
- la télécommande est par ondes infrarouges,
- la télécommande est par fil,
- la télécommande est par fibre optique,
- la structure comporte en outre une source d'alimentation électrique par éolienne,
- le/les extrémités avant des panneaux photovoltaïques sont placées sensiblement contre la face arrière de l'extrémité supérieure du panneau d'affichage,
- le/les extrémités avant des panneaux photovoltaïques sont placées sensiblement contre la face arrière de l'extrémité supérieure d'un écran de contraste du panneau d'affichage,
- le/les panneaux photovoltaïques sont horizontaux,
- le/les panneaux photovoltaïques sont inclinés du haut et l'avant vers le bas et l'arrière,
- le/les panneaux photovoltaïques sont soit horizontaux, soit inclinés du haut et l'avant vers le bas et l'arrière selon un angle compris entre 0° exclus et 45° par rapport à un plan horizontal,
- l'horizontalité ou l'inclinaison du/des panneaux photovoltaïques est réglable,
- l'horizontalité ou l'inclinaison du/des panneaux photovoltaïques est réglable pour chacun des panneaux photovoltaïques,
- le/les panneaux photovoltaïques sont horizontaux ou inclinés du haut et l'avant vers le bas et l'arrière selon un angle compris entre 0° exclus et 22,5° par rapport à un plan horizontal,
- de préférence, le/les panneaux photovoltaïques sont inclinés du haut et l'avant vers le bas et l'arrière selon un angle compris entre 0° et 12° par rapport à un plan horizontal,
- le/les panneaux photovoltaïques est/sont incliné(s) du haut et l'avant vers le bas et l'arrière selon un angle compris entre 5° et 45° par rapport à un plan horizontal,
- ledit au moins un panneau photovoltaïque forme une couverture de la passerelle,
- les panneaux photovoltaïques sont en continuité les uns des autres et forment une couverture de la passerelle,
- le panneau d'affichage comporte deux extrémités latérales et ledit au moins un panneau photovoltaïque est étendu à l'arrière du panneau d'affichage de manière à ne pas déborder latéralement desdites extrémités latérales,
- ledit au moins un panneau photovoltaïque se termine latéralement à distance d'une extrémité latérale du panneau d'affichage, et une plaque de couverture latérale est disposée dans le plan des panneaux photovoltaïques pour combler l'espace entre le panneau d'extrémité et l'extrémité latérale correspondante du panneau d'affichage,
- la structure est d'un premier type à un seul pilier support ou d'un deuxième type à deux piliers support, la traverse étant supportée à chacune de ses deux extrémités latérales par un des deux piliers support pour le deuxième type,
- le pilier support est un pilier simple poteau,
- le pilier support est composite, formé d'un assemblage de poteaux,
- le pilier support est ancré au sol sur ou dans un massif de béton,
- la structure est essentiellement métallique et constituée de plaques et tubes métalliques fixés entre eux,
- le panneau d'affichage et ledit au moins un panneau photovoltaïque sont placés le long de la traverse de manière à équilibrer la charge apportée par ledit panneau d'affichage et ledit au moins un panneau photovoltaïque par rapport audit au moins un pilier support,
- la structure comporte un seul pilier support supportant médianement la traverse, le panneau d'affichage et ledit au moins un panneau photovoltaïque,
- la structure comporte un seul pilier support supportant la traverse médianement et le panneau d'affichage et le/les panneaux photovoltaïques sont disposés de manière égale/équilibrée de part et d'autre du pilier support,
- le panneau d'affichage lumineux comporte en périphérie de sa face avant, au moins en haut, une zone de contraste visuel encore dite « écran de contraste »,
- la zone de contraste visuel présente un bord supérieur horizontal auquel est fixé ledit au moins un panneau photovoltaïque,
- le panneau d'affichage comporte en outre vers le haut et l'avant un pare-soleil s'étendant à l'avant dudit panneau d'affichage et possiblement latéralement à ce dernier,
- le pare soleil dans sa région en haut du panneau d'affichage est incliné du haut et arrière vers le bas et l'avant,
- le pare soleil dans sa région en haut du panneau d'affichage est formé ou comporte des panneaux photovoltaïques, lesdits panneaux photovoltaïques étant de dimensions adaptées à leur fonction de pare-soleil.

La présente invention va maintenant être exemplifiée sans pour autant en être limitée avec la description qui suit en relation avec les figures suivantes:
- la Figure 1 qui représente la disposition des panneaux photovoltaïques installés sur un panneau à messages variables lumineux selon une vue avant,
- la figure 2 qui représente la disposition des panneaux photovoltaïques installés sur un panneau à messages variables lumineux selon une vue arrière,
- la figure 3 qui représente la disposition des panneaux photovoltaïques installés sur un panneau à messages variables lumineux selon une vue de côté, et
- la figure 4 qui représente à panneau à messages variable lumineux équipé de panneaux photovoltaïques selon la présente invention et installé sur sa structure porteuse et ses massifs en béton.

Dans son principe, la structure d'affichage lumineux pour voie(s) de circulation automobile comporte au moins un pilier support vertical, une traverse sensiblement horizontale fixée en hauteur sur ledit au moins un pilier support et un panneau d'affichage lumineux à message variable fixé sur ladite traverse, ledit panneau d'affichage sensiblement parallélépipédique d'épaisseur relativement réduite ayant une face avant sur laquelle les messages lumineux sont diffusés et une face arrière, ledit panneau d'affichage étant allongé le long de la traverse, parallèlement et fixé à cette dernière, ladite structure comportant une source d'alimentation électrique autonome comprenant au moins un panneau photovoltaïque.

La structure d'affichage lumineux présente la particularité selon laquelle, le/les panneaux photovoltaïques sont disposés vers le haut et en arrière du panneau d'affichage, dans un plan horizontal ou, de préférence, incliné mais non vertical porté par une ligne horizontale parallèle à la traverse et au panneau d'affichage, le/les extrémités avant des panneaux photovoltaïques étant placées sensiblement contre l'extrémité supérieure du panneau d'affichage, le/les extrémités avant des panneaux photovoltaïques étant plus hautes que le/les extrémités arrières du/desdits panneaux photovoltaïques dans le cas de panneaux photovoltaïques inclinés.

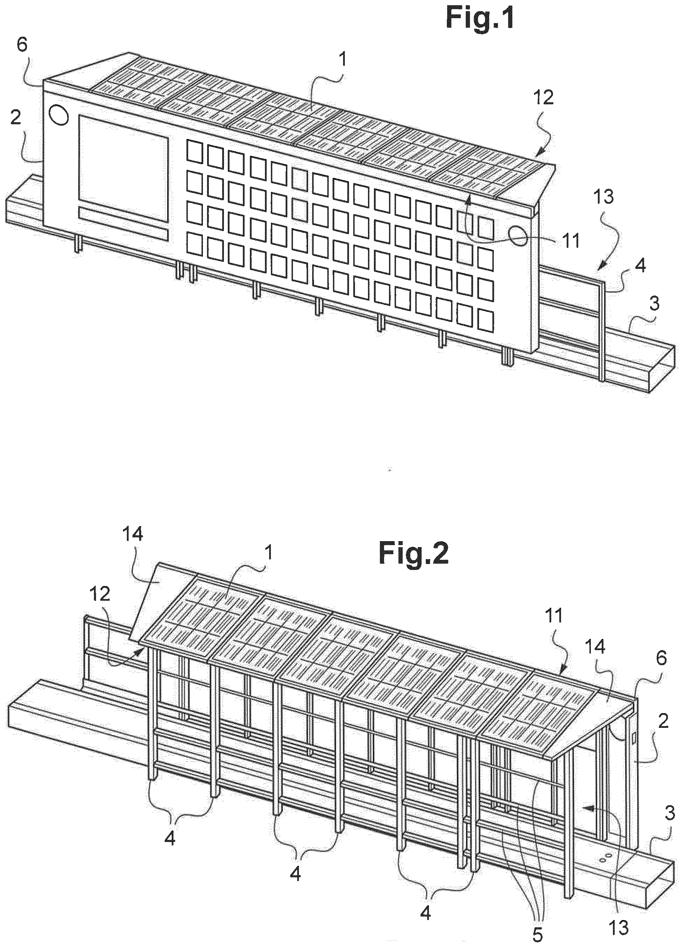

Ainsi, sur la Figure 1 où seuls les éléments en hauteur de la structure ont été représentés, on voit une traverse 3 sur l'avant de laquelle un panneau d'affichage lumineux 2 est fixé par l'intermédiaire de supports verticaux. Une passerelle 13 sur laquelle du personnel peut circuler et avoir accès à la face arrière du panneau d'affichage 2 est aménagée sur la traverse 3 et on peut noter la présence d'un garde-corps bordant les côtés ladite passerelle. Le garde-corps arrière de la passerelle 13 est encore mieux visible sur la Figure 2 avec ses montants 4. Les panneaux photovoltaïques 1 sont fixés à la partie supérieure et vers l'arrière du panneau à messages variable lumineux 2 et à la traverse 3 via les petits montants 4 et les petites traverses 5 du garde-corps arrière.

A noter que les qualificatifs « avant » et « arrière » et leurs équivalents sont définis par rapport au panneau d'affichage qui comporte une face d'affichage considérée comme une face avant par opposition à sa face arrière. A noter aussi que quand on indique que le/les extrémités ou parties avant des panneaux photovoltaïques sont placées sensiblement contre l'extrémité supérieure du panneau d'affichage, on ne signifie pas que le montage est nécessairement affleurant. De fait, l'extrémité ou la partie avant 11 des panneaux photovoltaïques peut aussi bien être posée et fixée sur le bord supérieur du panneau d'affichage que contre la face arrière de ce bord supérieur. Les différentes possibilités de montage des panneaux en haut et vers l'arrière du panneau d'affichage dépendent notamment des moyens de fixation mis en oeuvre : directement ou non sur le panneau d'affichage et/ou sur des montants servant à la fixation du panneau d'affichage à la traverse. Par exemple, dans le cas d'un panneau d'affichage comportant une zone de contraste optique en haut de sa face avant, les panneaux photovoltaïques peuvent en pratique être montés contre l'arrière du haut de cette zone de contraste. Ces possibilités de montage peuvent aussi dépendre du fait qu'il peut y avoir des trappes d'accès qu'il faut pouvoir ouvrir sur la face arrière du panneau d'affichage pour accéder à l'intérieur du panneau d'affichage et le dépanner.

La surface apparente des panneaux photovoltaïques est masquée partiellement ou totalement par un dispositif plan 6 installé dans le prolongement supérieur de la face avant du panneau à messages variables lumineux. Cette surface plane 6 dénommée « Ecran de contraste » est généralement présente sur la majorité des panneaux à messages variables lumineux. Son rôle initial est de constituer un écran de contraste ou zone de contraste optimisant la lisibilité des messages affichés. Sa surface est prise en compte dans la surface totale du panneau à messages variables lumineux. La présence des panneaux photovoltaïques installés selon l'invention ne génère pas ou peu de surface supplémentaire de prise au vent. De plus, vu de l'usager, cette disposition rend quasiment invisible les panneaux photovoltaïques.

Les extrémités latérales des panneaux photovoltaïques se poursuivent de chaque côté par une plaque de couverture latérale 14 qui est disposée dans le plan des panneaux photovoltaïques pour combler l'espace entre le panneau d'extrémité et l'extrémité latérale correspondante du panneau d'affichage. Les panneaux photovoltaïques 1 et les plaques de couverture latérale 14 forment une couverture de la passerelle 13 qui permet de protéger des intempéries le personnel et l'arrière du panneau d'affichage.

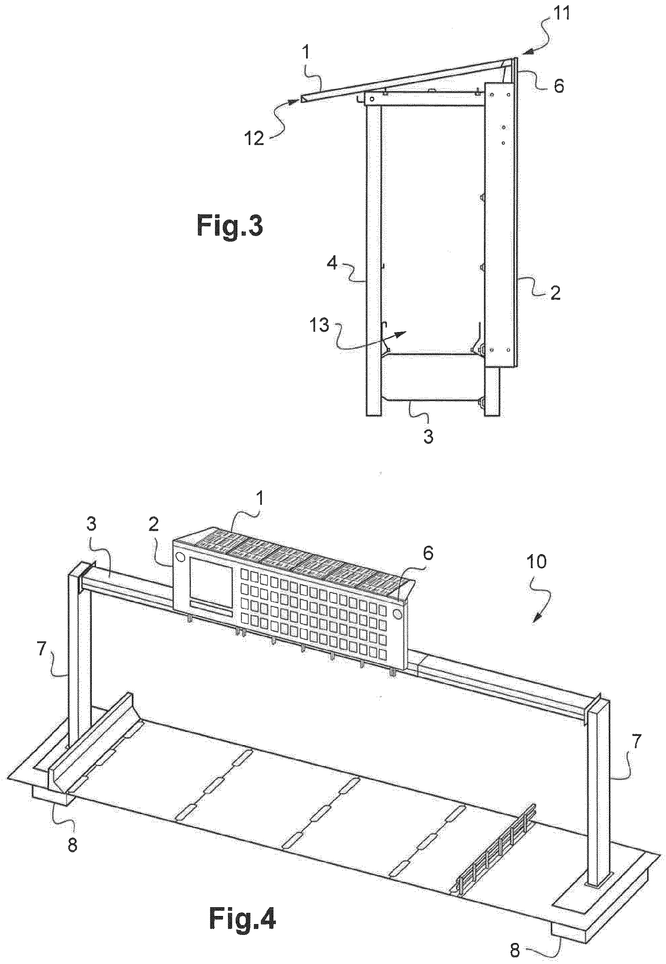

Les panneaux photovoltaïques 1 sont disposés sensiblement à l'horizontale tel que représenté en figure 3, en pratique et de préférence avec une légère inclinaison, de manière à réduire au maximum la surface apparente qui subit les effets du vent. Les panneaux photovoltaïques sont reliés mécaniquement au panneau à messages variable lumineux 2 dans sa partie supérieure. L'axe principal de chaque panneau photovoltaïque 1 qui est généralement de forme rectangulaire, peut être orienté parallèlement ou perpendiculairement à l'axe principal de la traverse 3 tel que représenté dans la forme de réalisation selon la figure 1.

Les éléments de la structure représentée dans sa forme à deux piliers sur la Figure 4, en particulier la traverse 3 et les piliers support 7, n'ont pas à être surdimensionnés pour tenir compte de l'ajout des panneaux photovoltaïques 1, de même pour les massifs en béton 8 d'ancrage au sol de la structure.

Plus généralement, le principe à la base de l'invention s'applique à des modes de réalisation variés tels que le montage sur une structure porteuse à deux piliers support (cf. Figure 1 à 4) ainsi qu'à des modes de réalisation basés sur des structures porteuses à un seul pilier support de type potence ou mat. Dans certaines variantes, on prévoit que les panneaux photovoltaïques soient inclinés d'une manière inverse à celle des Figures, c'est-à-dire que leurs extrémités avant soient plus basses que leurs extrémités arrière. Dans un tel cas, on prévoit un moyen de récupération des eaux d'écoulement à l'avant des panneaux photovoltaïques et/ou on prévoit, si nécessaire, un moyen de renforcement de l'étanchéité du panneau d'affichage. Dans une telle orientation, les panneaux restent cachés par la zone de contraste s'ils sont placés en arrière et bas de celle-ci.

## Revendications

1. Structure (10) d'affichage lumineux pour voie(s) de circulation automobile du type comportant au moins un pilier support vertical (7), une traverse (3) sensiblement horizontale fixée en hauteur sur ledit au moins un pilier support (7) et un panneau d'affichage lumineux à message variable (2) fixé sur ladite traverse, ledit panneau d'affichage (2) ayant une face avant sensiblement verticale, parallèle à la traverse (3), sur laquelle les messages lumineux sont diffusés et une face arrière, ledit panneau d'affichage étant allongé le long de la traverse (3), parallèlement et fixé à cette dernière, ladite structure comportant une source d'alimentation électrique autonome comprenant au moins un panneau photovoltaïque (1), ledit au moins un panneau photovoltaïque (1) étant disposé en haut et en arrière du panneau d'affichage (2) et présentant une face externe utile qui s'étend dans un plan horizontal ou incliné mais non vertical, parallèle à la traverse (3),
**caractérisée en ce que** la traverse (3) comporte une passerelle (13) sur laquelle du personnel peut circuler et accéder à la face arrière du panneau d'affichage (2), et **en ce que** la plateforme (13) est bordée sur l'arrière par un garde-corps antichute comportant des montants (4) sensiblement verticaux et **en ce que** lesdits montants servent de support à une partie arrière (12) du panneau photovoltaïque (1), la partie avant (11) du panneau photovoltaïque (1) étant maintenue par le panneau d'affichage (2) et/ou par des supports sensiblement verticaux solidaires de la traverse (3) et destinés à supporter le panneau d'affichage (2).

2. Structure selon la revendication 1, **caractérisée en ce que** ledit au moins un panneau photovoltaïque (1) forme une couverture de la passerelle (13).

3. Structure selon la revendication 1 ou 2, **caractérisée en ce que** l'extrémité avant du panneau photovoltaïque (1) est placée sensiblement contre l'extrémité supérieure du panneau d'affichage (2).

4. Structure selon l'une des revendications 1 à 3, **caractérisée en ce que** le/les panneaux photovoltaïques (1) sont soit horizontaux, soit inclinés du haut et l'avant vers le bas et l'arrière selon un angle compris entre 0° exclus et 45° par rapport à un plan horizontal.

5. Structure selon l'une quelconque des revendications précédentes, **caractérisée en ce que** le panneau d'affichage (2) comporte deux extrémités latérales et **en ce que** ledit au moins un panneau photovoltaïque (1) est étendu à l'arrière du panneau d'affichage de manière à ne pas déborder latéralement desdites extrémités latérales.

6. Structure selon la revendication 5, **caractérisée en ce que** ledit au moins un panneau photovoltaïque (1) se termine latéralement à distance d'une extrémité latérale du panneau d'affichage (2), et **en ce qu'**une plaque de couverture latérale (14) est disposée dans le plan des panneaux photovoltaïques pour combler l'espace entre le panneau (1) d'extrémité et l'extrémité latérale correspondante du panneau d'affichage (2).

7. Structure selon l'une quelconque des revendications précédentes, **caractérisée en ce que** le panneau d'affichage et ledit au moins un panneau photovoltaïque sont placés le long de la traverse de manière à équilibrer la charge apportée par ledit panneau d'affichage et ledit au moins un panneau photovoltaïque par rapport audit au moins un pilier support.

8. Structure selon la revendication 7, **caractérisée en ce qu'**elle comporte un seul pilier support supportant médianement la traverse, le panneau d'affichage et ledit au moins un panneau photovoltaïque.

9. Structure selon l'une quelconque des revendications précédentes, **caractérisée en ce que** le panneau d'affichage lumineux comporte en périphérie de sa face avant, au moins en haut, une zone de contraste visuel (6) présentant un bord supérieur horizontal adjacent à l'extrémité avant du panneau photovoltaïque (1).

10. Structure selon l'une quelconque des revendications précédentes, **caractérisée en ce que** le panneau d'affichage comporte en outre vers le haut et l'avant un pare-soleil s'étendant à l'avant dudit panneau d'affichage et possiblement latéralement à ce dernier, et **en ce que** le pare soleil dans sa région en haut du panneau d'affichage est formé ou comporte des panneaux photovoltaïques, lesdits panneaux photovoltaïques étant de dimensions adaptées à leur fonction de pare-soleil.

## Patentansprüche

1. Leuchtanzeigestruktur (10) für Fahrbahn(en) für Autos, vom Typ wenigstens einen senkrechten Stützpfosten (7), einen im Wesentlichen horizontalen Querträger (3), der oben auf dem wenigstens einen Stützpfosten (7) befestigt ist, und eine Leuchtanzeigetafel (2) für variable Anzeigen, die auf dem Querträger befestigt ist, aufzuweisen, wobei die Anzeigetafel (2) eine im Wesentlichen senkrechte, zum Querträger (3) parallele Vorderseite, auf der die leuchtenden Anzeigen ausgestrahlt werden, und eine Rückseite aufweist, wobei sich die Anzeigetafel parallel entlang des Querträgers (3) erstreckt und an diesem befestigt ist, wobei die Struktur eine autonome elektrische Stromversorgung aufweist, die wenigstens ein Fotovoltaikpaneel (1) aufweist, wobei das wenigstens eine Fotovoltaikpaneel (1) oben und hinten an der Anzeigetafel (2) angeordnet ist und eine äußere Nutzseite aufweist, die sich in einer horizontalen oder geneigten, aber nicht senkrechten Ebene parallel zum Querträger (3) erstreckt,
**dadurch gekennzeichnet, daß** der Querträger (3) einen Laufsteg (13) aufweist, auf dem sich Personal bewegen und zur Rückseite der Anzeigetafel (2) Zugang haben kann, und daß die Plattform (13) hinten mit einem Fallschutzgitter umgeben ist, das im Wesentlichen senkrechte Stützen (4) aufweist, und daß die Stützen als Abstützung für einen hinteren Teil (12) des Fotovoltaikpaneels (1) dienen, wobei der vordere Teil (11) des Fotovoltaikpaneels (1) durch die Anzeigetafel (2) und/oder durch im Wesentlichen senkrechte, mit dem Querträger (3) verbundene und zum Abstützen der Anzeigetafel (2) dienende Abstützungen gehalten ist.

2. Struktur gemäß Anspruch 1, **dadurch gekennzeichnet, daß** das wenigstens eine Fotovoltaikpaneel (1) eine Abdeckung des Laufstegs (13) bildet.

3. Struktur gemäß Anspruch 1 oder 2, **dadurch gekennzeichnet, daß** das vordere Ende des Fotovoltaikpaneels (1) im Wesentlichen gegen das obere Ende der Anzeigetafel (2) gesetzt ist.

4. Struktur gemäß einem der Ansprüche 1 bis 3, **dadurch gekennzeichnet, daß** das bzw. die Fotovoltaikpaneele (1) entweder horizontal oder mit einem Winkel von 0° bis 45° (0° ausgenommen) gegenüber einer horizontalen Ebene von oben vorne nach unten hinten geneigt sind.

5. Struktur gemäß einem der vorangehenden Ansprüche, **dadurch gekennzeichnet, daß** die Anzeigetafel (2) zwei seitliche Enden aufweist und daß das wenigstens eine Fotovoltaikpaneel (1) sich hinter der Anzeigetafel so erstreckt, daß es seitlich nicht über die besagten seitlichen Enden hinausragt.

6. Struktur gemäß Anspruch 5, **dadurch gekennzeichnet, daß** das wenigstens eine Fotovoltaikpaneel (1) seitlich in einem Abstand von einem seitlichen Ende der Anzeigetafel (2) endet und daß eine seitliche Abdeckplatte (14) in der Ebene der Fotovoltaikpaneele angeordnet ist, um den Raum zwischen dem Endpaneel (1) und dem entsprechenden seitlichen Ende der Anzeigetafel (2) aufzufüllen.

7. Struktur gemäß einem der vorangehenden Ansprüche, **dadurch gekennzeichnet, daß** die Anzeigetafel und das wenigstens eine Fotovoltaikpaneel entlang des Querträgers so angeordnet sind, daß die durch die Anzeigetafel und das wenigstens eine Fotovoltaikpaneel erzeugte Last in Bezug auf den wenigstens einen Stützpfosten ausgeglichen ist.

8. Struktur gemäß Anspruch 7, **dadurch gekennzeichnet, daß** sie einen einzigen Stützpfosten aufweist, der den Querträger, die Anzeigetafel und das wenigstens eine Fotovoltaikpaneel mittig trägt.

9. Struktur gemäß einem der vorangehenden Ansprüche, **dadurch gekennzeichnet, daß** die Leuchtanzeigetafel am Umfang ihrer Vorderseite wenigstens oben eine optische Kontrastzone (6) mit einem horizontalen oberen, am vorderen Ende des Fotovoltaikpaneels (1) anliegenden Rand aufweist.

10. Struktur gemäß einem der vorangehenden Ansprüche, **dadurch gekennzeichnet, daß** die Anzeigetafel außerdem oben und nach vorne eine Sonnenblende aufweist, die sich vorne an der Anzeigetafel und eventuell seitlich an letzterer erstreckt, und daß die Sonnenblende im Bereich oben an der Anzeigetafel aus Fotovoltaikpaneelen besteht oder selbige aufweist, wobei die Fotovoltaikpaneele von deren Abmessungen her an deren Funktion als Sonnenblende angepaßt sind.

## Claims

1. A structure (10) of light display for vehicle traffic lane(s) of the type including at least one vertical support post (7), a substantially horizontal crossbar (3) fixed high to said at least one support post (7) and a variable-message light display panel (2) fixed to said crossbar, said display panel (2) having a substantially vertical front face, parallel to the crossbar (3), on which the light messages are broadcast, and a rear face, said display panel being elongated along the crossbar (3), parallel and fixed to the latter, said structure including an autonomous electric power supply source comprising at least one photovoltaic panel (1), said at least one photovoltaic panel (1) being arranged on the top and the rear of the display panel (2) and having a useful external face that extends in a horizontal or inclined but non vertical plane, parallel to the crossbar (3),
**characterized in that** the crossbar (3) includes a footbridge (13) on which personnel can walk and accede to the rear face of the display panel (2), and **in that** the platform (13) is bordered on the rear by an anti-fall guard rail including substantially vertical struts (4) and **in that** said struts serve as a support for a rear part (12) of the photovoltaic panel (1), the front part (11) of the photovoltaic panel (1) being held by the display panel (2) and/or by substantially vertical supports integral with the crossbar (3) and intended to support the display panel (2).

2. The structure according to claim 1, **characterized in that** said at least one photovoltaic panel (1) forms a cover for the footbridge (13).

3. The structure according to claim 1 or 2, **characterized in that** the front end of the photovoltaic panel (1) is placed substantially against the upper end of the display panel (2).

4. The structure according to one of claims 1 to 3, **characterized in that** the photovoltaic panel(s) (1) are either horizontal, or inclined from the top front to the bottom rear according to an angle comprised between 0° excluded and 45° with respect to a horizontal plane.

5. The structure according to anyone of previous claims, **characterized in that** the display panel (2) includes two lateral ends and **in that** said at least one photovoltaic panel (1) is extended on the rear of the display panel so as not to protrude laterally from said lateral ends.

6. The structure according to claim 5, **characterized in that** said at least one photovoltaic panel (1) ends laterally remote from a lateral end of the display panel (2), and **in that** a lateral cover plate (14) is arranged in the plane of photovoltaic panels to fill the space between the end panel (1) and the corresponding lateral end of the display panel (2).

7. The structure according to anyone of previous claims, **characterized in that** the display panel and said at least one photovoltaic panel are placed along the crossbar so as to equilibrate the load added by said display panel and said at least one photovoltaic panels with respect to said at least one support post.

8. The structure according to claim 7, **characterized in that** it includes a single support post supporting medianly the crossbar, the display panel and said at least one photovoltaic panel.

9. The structure according to anyone of previous claims, **characterized in that** the light display panel includes at the periphery of its front face, at least on the top, an area of visual contrast (6) having a horizontal upper edge adjacent to the front end of the photovoltaic panel (1).

10. The structure according to anyone of previous claims, **characterized in that** the display panel further includes towards the top and the front a sunshade extending on the front of said display panel and possibly laterally to the latter, and **in that** the sunshade, in its region at the top of the display panel, is formed of or includes photovoltaic panels, said photovoltaic panels having dimensions adapted to their sunshade function.
